# EUROPEAN PATENT APPLICATION

(11) **EP 3 460 668 A1**
(43) Date of publication of application: **27.03.2019**
(21) Application number: 18160899.3
(22) Date of filing: 09.03.2018
(51) Int. Cl.: G06F 12/02, G06F 11/10, G06F 11/14, H04N 21/218, H04N 21/2183

(54) **VIDEO SERVER AND BROADCASTING SYSTEM**

(30) Priority: 20.09.2017 JP 2017180275
(71) Applicant: KABUSHIKI KAISHA TOSHIBA, Minato-ku Tokyo 105-8001 (JP); Toshiba Infrastructure Systems & Solutions Corporation, Kawasaki-shi, Kanagawa 212-0013 (JP)
(72) Inventor: KAMIJIMA, Yuki, Kanagawa, 212-0013 (JP)
(74) Representative: AWA Sweden AB

(57) **Abstract**

A video server includes a memory device; a receiving device that acquires contents data; a server control device that stores, into the memory device, the contents data acquired by the receiving device, the server control device that reads the contents data out of the memory device. The memory device includes a semiconductor memory device; and a memory control device that stores and reads, the contents data in a first unit of area and performs a read-retry-operation of re-reading the contents data out of a first area in the first unit of area if detected an error on the contents data read out of the first area of the semiconductor memory device in the first unit of area, and moves the contents data into a second area if a number of times of performing the read-retry-operation by the memory control device reached at a first number of times of read-retry-operations.

## Description

### BACKGROUND

### Related Art

Embodiments of the present invention relate to a video server and a broadcasting system.

### Description of Related Art

In recent years, video servers including a flash memory have been known. In a conventional video server, for example, high reliability is implemented in processing such as recording and reproducing content data for broadcasting by using a single level cell (SLC) type NAND flash memory.

However, in the conventional video server, for example, when a multi-level cell (MLC) type NAND flash memory, which is inexpensive and capable of having a large capacity is used, reliability is lowered when compared with the SLC type NAND flash memory, and thus there is a possibility that the reliability may be lowered in processing such as recording and reproducing content data.

Japanese Unexamined Patent Application, First Publication No. 2014-112377 discloses related art of the video servers.

### BRIEF DESCRIPTION OF THE DRAWINGS

FIG. 1 is a block diagram illustrating an example of a broadcasting system and a video server according to the first embodiment.
FIG. 2 is a block diagram illustrating an example of a memory unit according to the first embodiment.
FIG. 3 is a flowchart illustrating an example of operation of the video server according to the first embodiment.
FIG. 4 is a flowchart illustrating an example of a data reading process of the memory unit of the first embodiment.
FIG. 5 is a flowchart illustrating an example of a movement determination process according to the first embodiment.
FIG. 6 is a flowchart illustrating an example of a movement process according to the first embodiment.
FIG. 7 is a diagram illustrating an example of the movement process according to the first embodiment.
FIG. 8 is a flowchart illustrating an example of a movement process according to a second embodiment.
FIG. 9 is a diagram illustrating an example of the movement process according to the second embodiment.
FIG. 10 is a flowchart illustrating an example of a movement process according to a third embodiment.
FIG. 11 is a diagram illustrating an example of the movement process according to the third embodiment.

### DETAILED DESCRIPTIONS

In some aspects of embodiments, a video server may include, but is not limited to, a memory device; a receiving device that receives contents data; a server control device that stores, into the memory device, the contents data received by the receiving device, the server control device that reads the contents data out of the memory device; an output device that outputs the contents data read out of the memory device by the server control device. The memory device may include, but is not limited to, a semiconductor memory device; and a memory control device that stores, in a first unit of area, the contents data in the semiconductor memory device and read, in the first unit of area, the contents data out of the semiconductor memory device. The memory control device performs a read-retry-operation of re-reading the contents data out of a first area of the semiconductor memory device in the first unit of area in case that the memory control device detected an error on the contents data that the memory control device have read out of the first area of the semiconductor memory device in the first unit of area. The memory control device moves the contents data in the first area into a second area of the semiconductor memory device, which is different from the first area in case that a number of times of performing the read-retry-operation by the memory control device reached at a first number of times of read-retry-operations.

In some cases, the memory control device moves the contents data in the first area into the second area of the semiconductor memory device in case that a number of times of having read the contents data out of the first area by the memory control device reached at a second number of times of reading.

In some cases, the second number of times of reading is defined in accordance with a number of times of performing re-writing into the first area.

In some cases, the memory control device moves the contents data in the first area into the second area of the semiconductor memory device in case that a predefined time period has elapsed from having rewritten the contents data in the first area.

In some cases, the memory control device moves, as a first unit, the contents data in the first area into the second area of the semiconductor memory device.

In some cases, the memory control device moves, as a second unit, contents data in a third area including the first area into a fourth area of the semiconductor memory device, and the second unit is a collectively erasable unit.

In some cases, the memory control device moves, as a data contents unit, contents data in a fifth area including the first area into a different area from the fifth area of the semiconductor memory device.

In some cases, the memory control device performs the read-retry-operation in case that the memory control device detected an error on the contents data that the memory control device have read out of the first area of the semiconductor memory device.

In some cases, the memory control device determines whether another area is secured for storing the contents data of the first area, and the memory control device outputs an alarm in case that the memory control device determines that the other area is not secured.

In other aspects of embodiments, a broadcasting system may include, but is not limited to, a video server; a transmitter device that transmits the contents data to the video server; and a broadcasting equipment that broadcasts the contents data from the video server. The video server may include, but is not limited to, a memory device; a receiving device that receives contents data; a server control device that stores, into the memory device, the contents data received by the receiving device, the server control device that reads the contents data out of the memory device; an output device that outputs the contents data read out of the memory device by the server control device. The memory device may include, but is not limited to, a semiconductor memory device; and a memory control device that stores, in a first unit of area, the contents data in the semiconductor memory device and read, in the first unit of area, the contents data out of the semiconductor memory device. The memory control device performs a read-retry-operation of re-reading the contents data out of a first area of the semiconductor memory device in the first unit of area in case that the memory control device detected an error on the contents data that the memory control device have read out of the first area of the semiconductor memory device in the first unit of area, and the memory control device that moves the contents data in the first area into a second area of the semiconductor memory device, which is different from the first area in case that a number of times of performing the read-retry-operation by the memory control device reached at a first number of times of read-retry-operations.

The phrase "the receiving device receives contents data" herein may refer to "a device receives contents data for temporary holding the contents data. In some cases, the term "temporary" may refer to such a short time as to enable the receiving device to encode the contents data. That phrase does not refer to permanently holding the contents data or not to continuously holding the contents data such a long time as to allow another element to access the contents data anytime such as functions of data base.

Hereinafter, a video server and a broadcasting system according to embodiments will be described with reference to the drawings.

### (First embodiment)

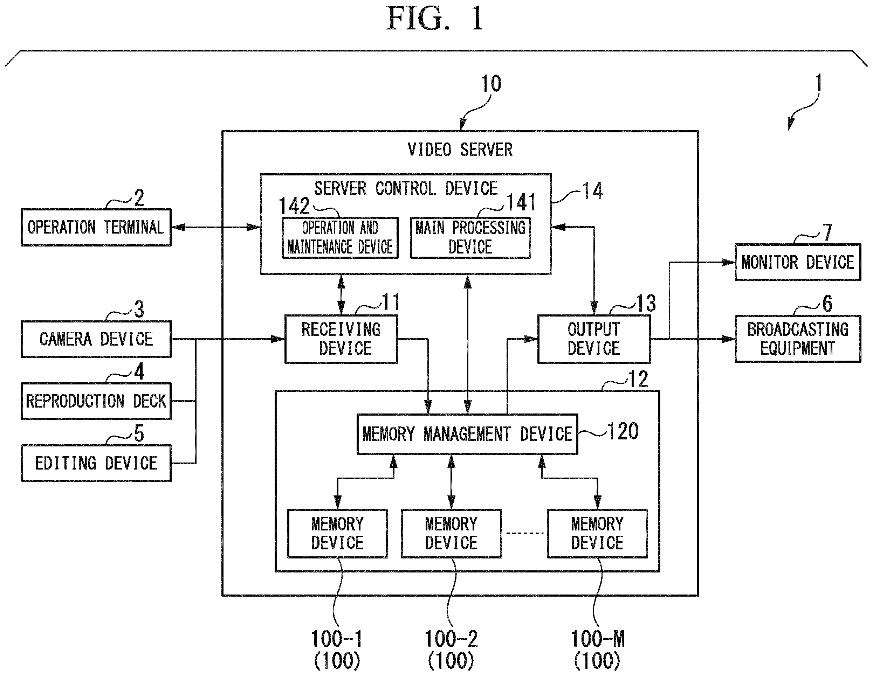

FIG. 1 is a block diagram illustrating an example of a broadcasting system 1 and a video server 10 according to the present embodiment.

As illustrated in FIG. 1, the broadcasting system 1 includes an operation terminal 2, a camera device 3, a reproduction deck 4, an editing device 5, a broadcasting equipment 6, a monitor device 7, and a video server 10.

For example, the broadcasting system 1 records content data (material data) such as video data transmitted from external devices such as the camera device 3, the reproduction deck 4, and the editing device 5, and outputs the recorded content data to the broadcasting equipment 6 and the like.

The operation terminal 2 is, for example, a host control device, a maintenance terminal, or the like, and transmits various types of data to the video server 10 in accordance with an operation of a user. Here, the various types of data are, for example, a control command, a reproduction list, and the like. Also, the control command is, for example, an instruction for selecting content data to be reproduced, a reproduction start instruction (an on-air instruction), an end instruction (for example, a reproduction end instruction), or the like.

The camera device 3 captures a video on the basis of an operation of a user and records speech via a microphone (not illustrated). The camera device 3 generates content data by associating (synchronizing) the captured image data (video data) with the recorded speech data. The camera device 3 transmits the generated content data to the video server 10 on the basis of the operation of the user.

The reproduction deck 4 transmits content data recorded on various types of recording media (recording media) to the video server 10 on the basis of the operation of the user. Here, the various types of recording media are, for example, a flash memory (a semiconductor element memory), a tape medium, a hard disk, or the like. Also, for example, the various types of recording media may be movie films or audio cassettes. Also, for example, the reproduction deck 4 may transmit the content data to the video server 10 according to, for example, a baseband signal.

The editing device 5 transmits (transfers) edited content data to the video server 10 on the basis of the operation of the user. The editing device 5 may transmit the content data in the form of, for example, a material exchange format (XMF) file.

Also, in the present embodiment, the camera device 3, the reproduction deck 4, and the editing device 5 are examples of a transmitting device configured to transmit the content data to the video server 10.

For example, the video server 10 records content data of an on-air broadcast program from a transmitting device such as the camera device 3, the reproduction deck 4, the editing device 5, or the like and selectively reproduces (transmits) the corresponding content data according to the on-air instruction. The video server 10 performs content data writing control or content data reading control in accordance with an instruction based on the user's operation.

Also, the video server 10 includes a receiving device 11, a memory device 12, an output device 13, and a server control device 14.

For example, the receiving device 11 receives content data such as video signals sent from the camera device 3, the reproduction deck 4, the editing device 5, and the like and executes a recording process in which the received content data is encoded. The receiving device 11 executes this recording process under control of the server control device 14, which will be described below, and outputs the encoded content data to the memory device 12. Here, the content data includes, for example, video data, audio data, and the like. The receiving device 11 includes, for example, an encoder for encoding various types of data.

The memory device 12 is a storage device configured to record (store) the content data under the control of the server control device 14. The memory device 12 includes a memory management device 120 and a plurality of memory devices 100 (100-1, 100-2, ..., 100-M). Also, the memory device 100-1, the memory device 100-2, ..., the memory device 100-M have the same configuration and will be described as memory devices 100 when they are any memory device provided in the video server 10 or the memory device 12 or when they are not distinguished.

The memory management device 120 is, for example, a processor including a central processing device (CPU) and the like, and generally controls the memory device 12. For example, the memory management device 120 distributes the content data input to the memory device 12 to each of the memory devices 100 so that the distributed content data is stored. Also, the memory management device 120 reads the content data from the memory device 100, for example, under the control of the server control device 14, and outputs the read content data to the output device 13. Also, the memory management device 120 transmits a notification of an alarm received from the memory device 100 to the server control device 14.

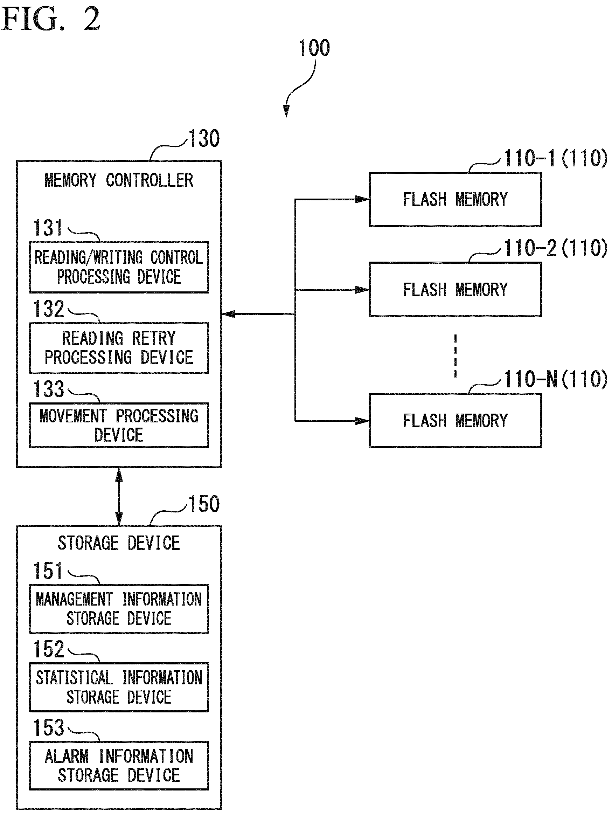

The configuration of the memory device 100 will be described below with reference to FIG. 2.

The output device 13 includes, for example, a decoder for decoding various formats of data, decodes content data read from the memory device 12, and performs a reproduction process in which the decoded content data (for example, video signals and the like) is output. In this manner, the output device 13 outputs the content data read from the memory device 12. The output device 13 may output the content data read from the memory device 12 by the server control device 14, for example, as a file.

The server control device 14 is, for example, a processor including a CPU or the like, and generally controls the video server 10. The server control device 14 causes the memory device 100 provided in the memory device 12 to record the content data received by the receiving device 11, and reads the content data recorded in the memory device 100 from the memory device 100.

Also, the server control device 14 includes a main processing device 141 and an operation and maintenance device 142.

The main processing device 141 controls a recording process, a reproduction process, an output process, a deletion process, and the like of content data, which are main processes of the video server 10. For example, if content data is recorded, the main processing device 141 instructs the receiving device 11 to receive the content data and instructs the receiving device 11 to encode the received content data. Then, the main processing device 141 instructs the memory device 12 to write the content data. That is, the main processing device 141 causes the memory device 100 provided in the memory device 12 to record the content data received by the receiving device 11.

Also, for example, when the content data is reproduced, the main processing device 141 instructs the memory device 12 to read the content data and instructs the output device 13 to decode the read content data from encoded data and output the decoded content data.

The operation and maintenance device 142 controls various types of maintenance processes of the video server 10. For example, the operation and maintenance device 142 provides an alarm notification provided from the memory device 100 via the memory management device 120 to the outside of the video server 10 (for example, a user).

The broadcasting equipment 6 receives the reproduced content data from the output device 13 of the video server 10. The broadcasting equipment 6 broadcasts the reproduced content data. Also, the broadcasting equipment 6 may broadcast the content data in either a wired mode or a wireless mode.

The monitor device 7 receives the reproduced content data from the output device 13 of the video server 10. The monitor device 7 performs a preview display process on an image serving as the content data on a screen. Also, the monitor device 7 may output speech as the content data from a speaker (not illustrated).

Next, a configuration of the memory device 100 will be described with reference to FIG. 2.

FIG. 2 is a block diagram illustrating an example of the memory device 100 of the present embodiment.

As illustrated in FIG. 2, the memory device 100 includes a plurality of flash memories 110 (110-1, 110-2, ..., 110-N), a memory controller 130, and a storage device 150. The flash memory 110-1, the flash memory 110-2, ..., the flash memory 110-N have the same configuration and will be described as flash memories 110 when they are any flash memory provided in the memory device 100 or when they are not particularly distinguished.

The flash memory 110 is, for example, an MLC type NAND flash memory large scale integration (LSI). Here, the MLC type NAND flash memory LSI is, for example, a type of NAND flash memory LSI in which a plurality of levels are stored in one memory cell. In the present embodiment, the flash memory 110 is an example of a semiconductor memory.

Also, the flash memory 110 has a page (a first area) which is a device in which data can be read and data errors can be detected, and a block (a second area) which is a device in which collective erasure is possible. That is, for example, in the flash memory 110, it is possible to write data and read data in units of pages (in units of first areas) after data is erased in units of blocks (in units of second areas).

The storage device 150 stores various types of information for controlling the memory device 100. The storage device 150 includes a management information storage device 151, a statistical information storage device 152, and an alarm information storage device 153.

The management information storage device 151 stores various types of management information for controlling the memory device 100. For example, the management information storage device 151 stores management information such as information about writing positions and areas such as writing pages and writing blocks, free area information about free pages, free blocks, and the like. Also, the management information includes, for example, information indicating a date and time (e.g., a year, a month, a day, a clock time, and the like) on which data is written for each page or each block of the flash memory 110.

The statistical information storage device 152 includes, for example, a rewritable nonvolatile memory and stores various types of statistical information related to rewriting the flash memory 110. For example, the statistical information storage device 152 stores information such as the following pieces of information (1) to (7) as statistical information.

The statistical information includes, for example, (1) the number of reading retries in units of pages or blocks (after a movement process), (2) the number of error bits in the flash memory 110 (a cumulative value), (3) the number of retry errors in units of pages or blocks, (4) the number of reading retries at a time at which a reading retry error occurs (for the most recent reading retry error after the movement process), (5) the number of reading retries in units of pages or blocks (a cumulative value after initialization), (6) the number of reading retries at a time at which a retry error occurs (for the most recent retry error after initialization), (7) the number of times of reading in units of pages or blocks (after a writing or movement process), and the like.

The alarm information storage device 153 stores alarm information currently being generated so that an alarm notification is not redundantly provided.

The memory controller 130 controls writing and reading of data to and from the plurality of flash memories 110 provided in the memory device 100. The memory controller 130 is, for example, an integrated circuit such as a field programmable gate array (FPGA). In the present embodiment, the memory controller 130 is an example of a memory control device.

For example, when the recorded content data is read from the memory device 100 (the flash memory 110), the memory controller 130 executes a reading retry process (a retry process) in which reading is re-performed in units of first areas if an error is detected in data read in units of pages (first areas) from the flash memory 110. Also, if the number of reading retry processes reaches the predetermined number of times (the first number of times), the memory controller 130 causes data of a page for which the number of retry processes reaches the predetermined number to be moved to another area of the flash memory 110.

Also, for example, when the recorded content data is read from the memory device 100 (the flash memory 110), the memory controller 130 causes data of a page for which the number of times of reading reaches the predetermined number of times to be moved to another area of the flash memory 110 if the number of times of reading of data from the same page reaches the predetermined number of times (the second number of times).

Also, if a predetermined period elapses since the recorded content data was written to the page, the memory controller 130 causes data of a page for which the predetermined period elapses to be moved to another area of the flash memory 110.

Also, the memory controller 130 includes a reading/writing control processing device 131, a reading retry processing device 132, and a movement processing device 133.

The reading/writing control processing device 131 receives content data from the memory management device 120 and causes the received content data to be stored. The reading/writing control processing device 131 writes the content data to the flash memory 110 in units of pages. When the content data is written in units of pages, the reading/writing control processing device 131 causes a check code for determining a data error to be included and stored in units of pages.

Also, the reading/writing control processing device 131 reads the content data stored in the flash memory 110 in units of pages and determines whether there is an error (a reading error) in the read data. The reading/writing control processing device 131 determines whether there is an error in the read data according to the above-described check code, and causes the reading retry processing device 132 to execute a retry process if there is an error. Also, if there is no error in the read data, the reading/writing control processing device 131 outputs the read data to the memory management device 120.

Also, when data is written or read to or from the flash memory 110, the reading/writing control processing device 131 updates management information stored in the management information storage device 151 and updates statistical information stored in the statistical information storage device 152 as necessary.

Also, for example, the reading/writing control processing device 131 checks the number of times of reading retries stored in the statistical information storage device 152 and causes the movement processing device 133 to execute a movement process in which data of a relevant page is moved to another area if there is a page for which the number of times of reading retries reaches the above-described predetermined number of times (the first number of times). Also, in this case, the movement process is a movement process for securing reliability with respect to a reading error (a movement process for reading retry).

Also, for example, the reading/writing control processing device 131 checks the number of times of reading of the statistical information stored in the statistical information storage device 152 and causes the movement processing device 133 to execute the movement process in which data of a relevant page is moved to another area if there is a page for which the number of times of reading reaches the predetermined number of times (the second number of times). The movement process in this case is a movement process for securing reliability with respect to a reading disturbance (a movement process for a reading disturbance countermeasure).

Also, for example, the reading/writing control processing device 131 checks date and time information stored in the management information storage device 151 and causes the movement processing device 133 to execute a movement process for moving data of a relevant page to another area if there is a page for which a predetermined period (for example, several months, several years, or the like) since data was written elapses. Also, the movement process in this case is a movement process for securing reliability with respect to data retention (a movement process of a data retention countermeasure). Also, when the reading/writing control processing device 131 causes the movement processing device 133 to execute the movement process, for example, the movement process is executed in a period during which a high priority process such as a recording process, a reproduction process, an output process, a deletion process, or the like is not executed on content data.

If there is an error in the data read by the reading/writing control processing device 131, the reading retry processing device 132 executes a reading retry process, which is a process in which data is re-read. If the reading retry process is executed, the reading retry processing device 132 updates the number of reading retries stored in the statistical information storage device 152.

Also, if the number of reading retries is greater than or equal to a predetermined value (an upper limit value for the retries) or reaches a specified time for reading data (a specified reading time), the reading retry processing device 132 determines that a reading retry error occurs and causes a notification of an alarm indicating the reading retry error to be provided. If the reading retry error occurs, the reading retry processing device 132 causes the movement processing device 133 to execute the movement process in which data of a relevant page is moved to another area.

For example, the movement processing device 133 executes a movement process in which data of a target page is moved to another area. For example, when the page data is moved to the other area, the movement processing device 133 causes the page data to be moved in units of pages.

Also, when the page data is moved to the other area, the movement processing device 133 causes an alarm notification to be externally provided if the other area to which the page data is moved cannot be secured. That is, the movement processing device 133 checks management information stored in the management information storage device 151, determines whether the other area to which the page data can be moved can be secured, and notifies the server control device 14 of the alarm via the memory management device 120 if the other area to which the page data can be moved cannot be secured.

Also, when the alarm notification is externally provided, the movement processing device 133 checks alarm information stored in the alarm information storage device 153 and performs control so that the alarm notification is not redundantly provided. That is, the movement processing device 133 checks the alarm information and does not cause the alarm notification to be externally provided if the alarm notification was provided.

Also, when the page data is moved to the other area, the movement processing device 133 causes the reading retry processing device 132 to execute a reading retry process if there is an error in the read data (a reading error). Also, although the reading retry process here is basically similar to a reading retry process when ordinary data for the above-described content reproduction process or the like is read, the upper limit value for retries may be increased because it is unnecessary to consider a temporal restriction such as uninterrupted output of content data.

Also, the movement processing device 133 may be configured to execute each movement process on the basis of a predetermined priority ranking so that there is no contention for movement of content data with respect to the movement process for the reading retry error, the movement process for the reading retry, the movement process for the reading disturbance countermeasure, and the movement process for the data retention countermeasure. For example, a highest priority is set as a priority of the movement process for the reading retry error, a lowest priority is set as a priority of the movement process for the data retention countermeasure, and the movement processing device 133 determines a movement process to be executed on the basis of a priority setting if there is contention between movement processes.

Next, operation of the video server 10 according to the present embodiment will be described with reference to the drawings.

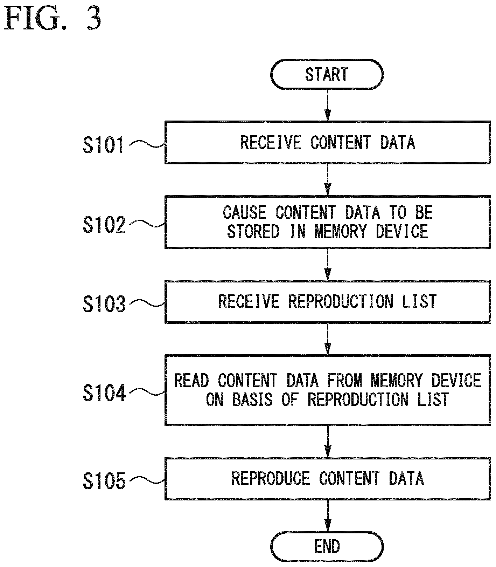

FIG. 3 is a flowchart illustrating an example of operation of the video server 10 according to the present embodiment. In FIG. 3, the video server 10 first receives content data (step S101). For example, the receiving device 11 of the video server 10 receives the content data such as video signals sent from the camera device 3, the reproduction deck 4, the editing device 5, and the like, and executes a recording process in which the received content data is encoded.

Next, the server control device 14 of the video server 10 causes the memory device 12 to store the content data (step S102). The memory management device 120 of the memory device 12, for example, causes the memory device 100 of the memory device 12 to store the encoded content data input from the receiving device 11. Also, for example, the memory management device 120 causes the content data to be stored in one memory device 100 of the plurality of memory devices 100 (100-1, 100-2, ..., 100-M).

Next, the server control device 14 receives a reproduction list from the operation terminal 2 (step S103). Here, the reproduction list includes, for example, information in which identification information of content data to be reproduced and reproduction start clock time information are associated.

Next, the server control device 14 reads the content data from the memory device 12 on the basis of the reproduction list received from the operation terminal 2 (step S104). For example, the memory management device 120 of the memory device 12 reads data for recording from the memory device 100 in accordance with the reproduction start clock time information on the basis of the control according to the reproduction list of the server control device 14, and converts the read data for recording into content data. The memory management device 120 outputs the read content data (obtained through the conversion) to the output device 13.

Next, the output device 13 of the video server 10 reproduces the content data (step S105). The output device 13 decodes the content data read from the memory device 12 and executes a reproduction process in which the decoded content data (for example, a video signal or the like) is output. For example, the output device 13 outputs the content data read from the memory device 12 to the broadcasting equipment 6. After the processing of step S105, the server control device 14 ends the process.

Also, although an example in which the video server 10 reads the content data from the memory device 12 on the basis of the reproduction list after causing the memory device 12 to store the content data and outputs the content data has been described in the above-describe example illustrated in FIG. 3, the embodiments are not limited thereto. For example, the video server 10 may execute a process in which content data is read from the memory device 12 while causing the content data to be stored in the memory device 12. That is, the memory device 12 is assumed to execute a writing process and a reading process on content data in parallel.

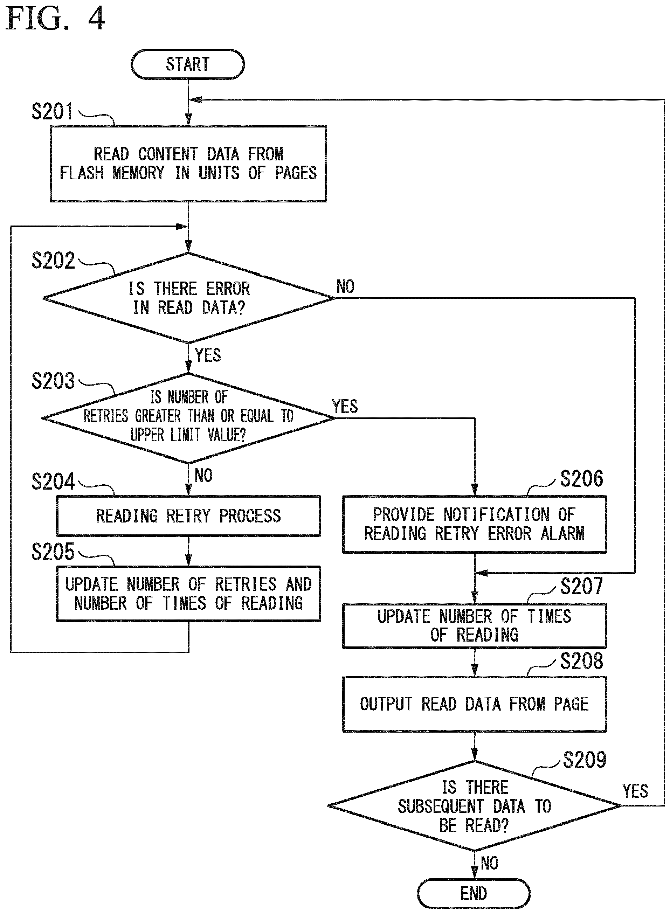

Next, a data reading process of the memory device 100 will be described with reference to FIG. 4.

FIG. 4 is a flowchart illustrating an example of the data reading process of the memory device 100 according to the present embodiment.

As illustrated in FIG. 4, the memory controller 130 of the memory device 100 firstly reads content data from the flash memory 110 in units of pages (step S201). That is, the reading/writing control processing device 131 of the memory controller 130 reads data for one page from the flash memory 110.

Next, the reading/writing control processing device 131 determines whether there is an error in the read data (step S202). The reading/writing control processing device 131 determines whether there is an error in the read data (a reading error) according to a check code for determining a data error in units of pages. If there is an error in the read data (step S202: YES), the reading/writing control processing device 131 moves the process to step S203. Also, if there is no error in the read data (step S202: NO), the reading/writing control processing device 131 determines that data is read normally and moves the process to step S207.

In step S203, the reading retry processing device 132 of the memory controller 130 determines whether the number of retries is greater than or equal to an upper limit value or whether a specified reading time is reached. If the number of retries is greater than or equal to the upper limit value or the specified reading time is reached (step S203: YES), the reading retry processing device 132 determines that a reading retry error occurs and moves the process to step S206. If the number of retries is less than the upper limit value thereof and the specified reading time is not reached (step S203: NO), the reading retry processing device 132 moves the process to step S204.

In step S204, the reading retry processing device 132 executes a reading retry process. That is, the reading retry processing device 132 re-reads data of a page in which an error is detected in the data read from the flash memory 110.

Next, the reading retry processing device 132 updates the number of retries and the number of times of reading (step S205). That is, the reading retry processing device 132 updates the number of retries and the number of times of reading, which are pieces of statistical information stored in the statistical information storage device 152. The reading retry processing device 132 returns the process to step S202 after the processing of step S205.

Also, in step S206, the reading retry processing device 132 causes a notification of a reading retry error alarm to be externally provided. The reading retry processing device 132 notifies the server control device 14 of the reading retry error alarm via the memory management device 120. The reading retry processing device 132 moves the process to step S207.

In step S207, the reading/writing control processing device 131 updates the number of times of reading. That is, the reading/writing control processing device 131 updates the number of times of reading, which is the statistical information stored in the statistical information storage device 152.

Next, the reading/writing control processing device 131 outputs the read data to the memory management device 120 (step S208).

Next, the reading/writing control processing device 131 determines whether there is subsequent data to be read (step S209). If there is subsequent data to be read (step S209: YES), the reading/writing control processing device 131 returns the process to step S201 and iterates the processing of steps S201 to S209. Also, if there is no subsequent data to be read (step S209: NO), the reading/writing control processing device 131 ends the process.

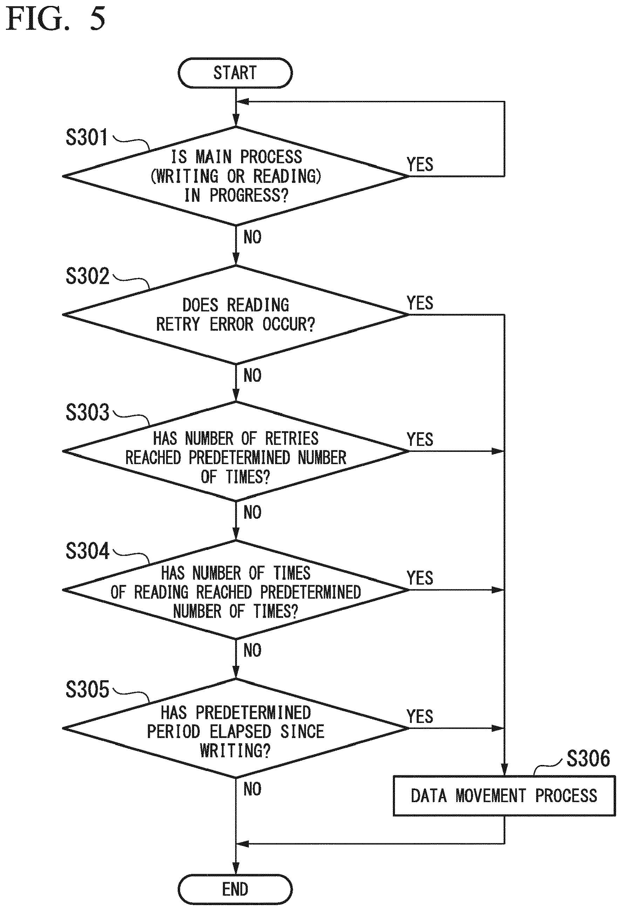

Next, a movement determination process according to the present embodiment will be described with reference to FIG. 5.

FIG. 5 is a flowchart illustrating an example of the movement determination process according to the present embodiment. Also, the process illustrated in FIG. 5 is executed by the movement processing device 133 periodically or when a cause for performing the movement process occurs.

As illustrated in FIG. 5, the movement processing device 133 first determines whether a main process is in progress (during a writing process or a reading process) (step S301). For example, the movement processing device 133 determines whether the writing process or the reading process for preferential processes such as a recording process, a reproduction process, an output process, and a deletion process on content data is being executed. That is, the movement processing device 133 determines whether these preferential processes are being executed according to the main process. If the main process is in progress (step S301: YES), the movement processing device 133 returns the process to step S301 and waits until the main process (the preferential process) ends. If the main process is not in progress (step S301: NO), the movement processing device 133 moves the process to step S302.

In step S302, the movement processing device 133 determines whether a reading retry error occurs. For example, the movement processing device 133 determines whether there is a page in which a reading retry error occurs on the basis of the number of retry errors, which is a part of the statistical information stored in the statistical information storage device 152. When a reading retry error occurs (step S302: YES), the movement processing device 133 moves the process to step S306 and executes a data movement process on a target page in which the reading retry error occurs (a movement process for a reading retry error). If no reading retry error occurs (step S302: NO), the movement processing device 133 moves the process to step S303.

In step S303, the movement processing device 133 determines whether the number of retries reaches the predetermined number of times (the first number of times). For example, the movement processing device 133 checks the number of retries, which is a part of the statistical information stored in the statistical information storage device 152, and determines whether there is a page for which the number of retries reaches the predetermined number of times (the first number of times). The movement processing device 133 moves the process to step S306 if the number of retries reaches the predetermined number of times (the first number of times) (step S303: YES) and executes a data movement process on a target page for which the number of retries reaches the predetermined number of times (the first number of times) (the movement process for reading retry). Also, if the number of retries does not reach the predetermined number of times (first number of times) (step S303: NO), the movement processing device 133 moves the process to step S304.

In step S304, the movement processing device 133 determines whether the number of times of reading reaches the predetermined number of times (the second number of times). For example, the movement processing device 133 checks the number of times of reading that is a part of the statistical information stored in the statistical information storage device 152, and determines whether there is a page for which the number of times of reading reaches the predetermined number of times (the second number of times). The movement processing device 133 moves the process to step S306 if the number of times of reading reaches the predetermined number of times (the second number of times) (YES in step S304) and executes a data movement process on a target page for which the number of times of reading reaches the predetermined number of times (the second number of times) (the movement process for the reading disturbance countermeasure). Also, if the number of times of reading does not reach the predetermined number of times (the second number of times) (step S304: NO), the movement processing device 133 moves the process to step S305.

In step S305, the movement processing device 133 determines whether a predetermined period elapses since writing. For example, the movement processing device 133 checks date and time information, which is a part of the management information stored in the management information storage device 151, and determines whether there is a page for which the predetermined period elapses since writing. If a predetermined period elapses since writing (step S305: YES), the movement processing device 133 moves the process to step S306 and executes a data movement process on a target page for which the predetermined period elapses since writing (the movement process for the data retention countermeasure). If the predetermined period does not elapse since writing (step S305: NO), the movement processing device 133 ends the determination process.

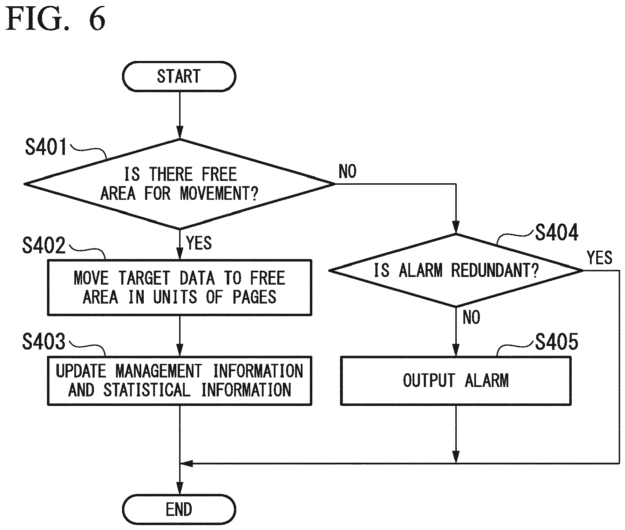

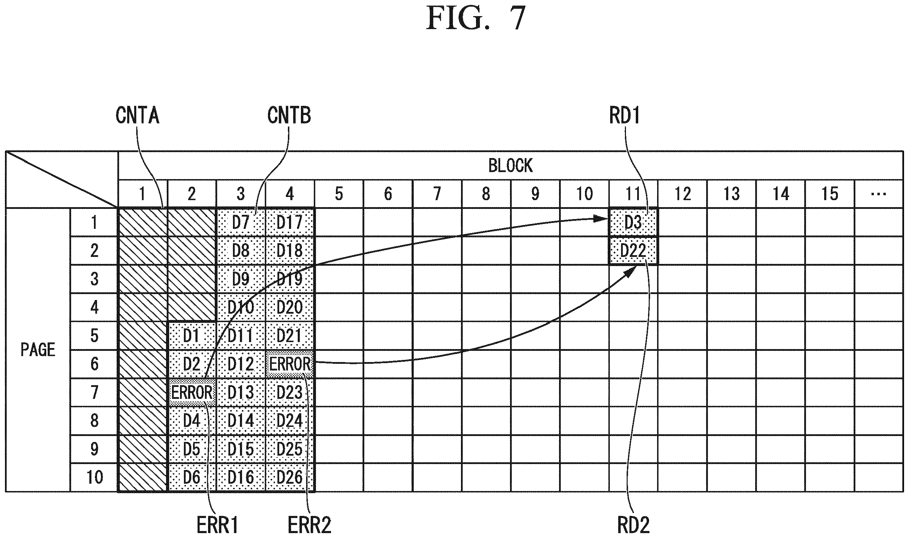

Next, the data movement process of step S306 of FIG. 5 will be described with reference to FIGS. 6 and 7.

FIG. 6 is a flowchart illustrating an example of the movement process according to the present embodiment. Also, FIG. 7 is a diagram illustrating an example of the movement process according to the present embodiment.

As illustrated in FIG. 6, in the movement process (the data movement process), the movement processing device 133 first determines whether there is a free area for movement (step S401). For example, the movement processing device 133 checks management information stored in the management information storage device 151 and determines whether there is a free area to which data can be moved in units of pages. If there is a free area for movement (step S401: YES), the movement processing device 133 moves the process to step S402. Also, if there is no free area for movement (step S401: NO), the movement processing device 133 moves the process to step S404.

In step S402, the movement processing device 133 moves target data to the free area in units of pages. For example, as illustrated in FIG. 7, the movement processing device 133 executes data movement in units of pages.

In FIG. 7, first, the flash memory 110 is assumed to store content data CNTA and content data CNTB. In this state, when the content data CNTB is read, the movement processing device 133 causes data D3 of a page number "7" of a block number "2" to be moved to, for example, a page of a page number "1" of a block number "11" in units of pages if a cause (an error ERR1) for executing a movement process, such as the number of retries reaching the predetermined number of times, occurs in the data D3 of the page number "7" of the block number "2."

Also, when the content data CNTB is read, the movement processing device 133 causes data D22 of a page number "6" of a block number "4" to be moved to, for example, a page of a page number "2" of a block number "11" in units of pages if a cause (an error ERR2) for executing the movement process, such as the number of retries reaching the predetermined number of times, occurs in the data D22 of the page number "6" of the block number "4."

When the content data CNTB is read next time, data RD1 of a movement destination is read as the data D3 and data RD2 of a movement destination is read as the data D22. Although the reading retry movement process has been described in the above-described example, the description also applies to other movement processes (for example, the movement process for the reading retry error, the movement process for the reading disturbance countermeasure, and the movement process for the data retention countermeasure).

Returning to the explanation of FIG. 6, next, the movement processing device 133 updates management information and statistical information (step S403). The movement processing device 133 executes updating management information related to the moved data (rewriting of the management information in the management information storage device 151) and executes updating statistical information related to the moved data (rewriting of the statistical information in the statistical information storage device 152). For example, the movement processing device 133 returns information such as the number of retries, date and time information, the number of times of reading, and the like related to data subjected to the movement process to initial values. After the processing of step S403, the movement processing device 133 ends the movement process.

Also, in step S404, the movement processing device 133 determines whether an alarm is redundant. The movement processing device 133 checks the alarm information storage device 153 and determines whether an alarm indicating that there is no free area for movement was already output. When the alarm is redundant (step S404: YES), the movement processing device 133 ends the movement process. If the alarm is not redundant (step S404: NO), the movement processing device 133 moves the process to step S405.

In step S405, the movement processing device 133 outputs the alarm. In other words, the movement processing device 133 notifies the server control device 14 of an alarm indicating that there is no free area for movement via the memory management device 120. Also, the movement processing device 133 updates currently generated alarm information in the alarm information storage device 153. After the processing of step S405, the movement processing device 133 ends the movement process.

As described above, the video server 10 according to the present embodiment includes the memory device 100, the receiving device 11, the server control device 14, and the output device 13. The receiving device 11 receives content data. The server control device 14 causes the memory device 100 to record the content data received by the receiving device 11 and reads the content data recorded in the memory device 100 from the memory device 100. The output device 13 outputs the content data read from the memory device 12 by the server control device 14. The memory device 100 includes the flash memory 110 (a semiconductor memory) in which data can be written and read in units of pages (first areas) and the memory controller 130 (a memory control device). When the recorded content data is read from the flash memory 110, the memory controller 130 executes a reading retry process (a retry process) for re-reading the data in units of pages if an error is detected in the data read in units of pages from the flash memory 110. If the number of reading retry processes reaches the predetermined first number of times (a predetermined threshold), the memory controller 130 moves data of a page for which the number of retry processes reaches the first number of times to another area of the flash memory 110.

Thereby, the video server 10 according to the present embodiment can improve reliability because data of a page for which a memory cell is likely to have deteriorated is moved to another area of the flash memory 110. For example, even when an MLC type NAND flash memory having lower reliability than an SLC type NAND flash memory is used as the flash memory 110, the video server 10 according to the present embodiment can secure high reliability in processing such as recording and reproducing content data.

Also, when the recorded content data is read from the flash memory 110 in the present embodiment, the memory controller 130 causes data of a page for which the number of times of reading reaches the predetermined second number of times (a predetermined threshold value) to be moved to another area of the flash memory 110 if the number of times that data was read from the same page reaches the second number of times.

Thereby, the video server 10 according to the present embodiment can improve reliability with respect to a reading disturbance in which the memory cell is deteriorated due to reading. That is, the video server 10 according to the present embodiment can secure higher reliability in processing such as recording and reproducing content data.

Also, in the present embodiment, the above-described second number of times may be determined in accordance with the number of times of rewriting of a page. That is, the threshold value (the second number of times) for performing the above-described movement process may be changed in accordance with the number of times of rewriting. For example, the second number of times may be set to the smaller number of times when the number of times of rewriting of the page is larger.

Thereby, because the video server 10 according to the present embodiment can set an appropriate threshold value (the second number of times) for performing the movement process in accordance with a degree of deterioration in consideration of a usage state of the memory cell, it is possible to further improve reliability with respect to a reading disturbance.

Also, in the present embodiment, if a predetermined period elapses since the recorded content data was written to a page, the memory controller 130 causes data of a page for which a predetermined period elapses to be moved to another area of the flash memory 110.

Thereby, the video server 10 according to the present embodiment can improve reliability with respect to data retention in which garbled data occurs according to the passage of time at which writing occurred. That is, the video server 10 according to the present embodiment can secure higher reliability in processing such as recording and reproducing content data.

Also, in the present embodiment, the memory controller 130 causes page data to be moved in units of pages when the page data is moved to another area.

Thereby, the video server 10 according to the present embodiment can, for example, move data of a page that may have a reliability problem to another area even when a free space of a movement destination is small.

Also, in the present embodiment, the memory controller 130 executes a retry process if an error is detected in data read in units of pages when page data is moved to another area.

Thereby, the video server 10 according to the present embodiment can perform the movement process even when a reading error occurs in the movement process, and thus reliability in the movement process can be improved.

Also, in the present embodiment, the memory controller 130 causes an alarm notification to be externally provided if another area to which data can be moved cannot be secured when the page data is moved to another area.

Thereby, in the video server 10 according to the present embodiment, because the user can recognize that another area to which data can be moved cannot be secured, the maintenance work of the video server 10 can be executed efficiently.

Also, in the present embodiment, the memory controller 130 causes a movement process in which page data is moved to another area to be executed during a period in which a high-priority process such as a recording process, a reproduction process, an output process, or a deletion process on content data is not being executed.

Thereby, in the video server 10 according to the present embodiment, it is possible to improve reliability without interrupting a high-priority process.

Also, in the present embodiment, if the number of reading retry processes (retry processes) reaches the predetermined number of times (an upper limit value for retries) or if a specified time (a specified reading time) for reading data is reached, the memory controller 130 determines that a reading retry error occurs and causes page data to be moved in units of pages when page data in which the reading retry error occurs is moved to another area.

Thereby, in the video server 10 according to the present embodiment, data in which a reading retry error occurs can be saved.

Also, the broadcasting system 1 according to the present embodiment includes the above-described video server 10, the transmitting device (for example, the camera device 3, the reproduction deck 4, the editing device 5, and the like) for transmitting content data to the video server 10, and the broadcasting equipment 6 for broadcasting the content data output from the video server 10.

Thereby, the broadcasting system 1 according to the present embodiment has an advantageous effect similar to that of the above-described video server 10 and can improve reliability. That is, the broadcasting system 1 according to the present embodiment can implement high reliability in processing such as recording and reproducing content data for broadcasting.

### (Second embodiment)

Next, a broadcasting system 1 and a video server 10 according to a second embodiment will be described with reference to the drawings.

Also, the broadcasting system 1 and the video server 10 according to the present embodiment are similar to those according to the above-described first embodiment except that a movement process is executed in units of blocks. Because the configurations of the broadcasting system 1 and the video server 10 of the present embodiment are similar to those of the first embodiment illustrated in FIGS. 1 and 2, descriptions thereof will be omitted here.

In the present embodiment, a memory controller 130 causes page data to be moved to another area in units of blocks including the page data to be moved when the page data is moved to another area.

Also, because a basic operation of the video server 10 according to the present embodiment is similar to that of the first embodiment illustrated in FIGS. 3 to 5 described above, a description thereof will be omitted here.

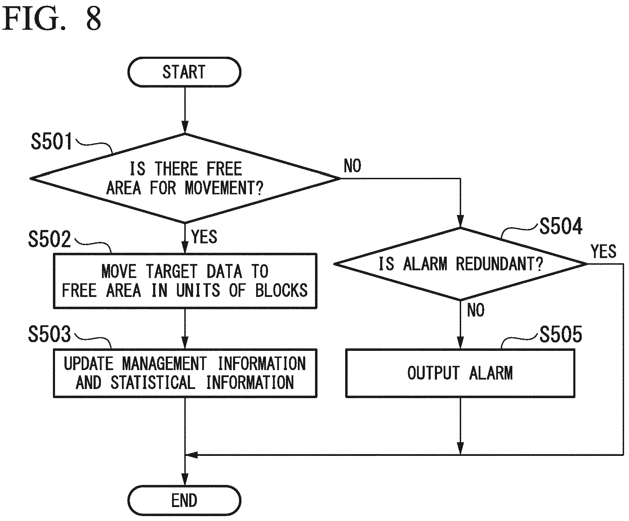

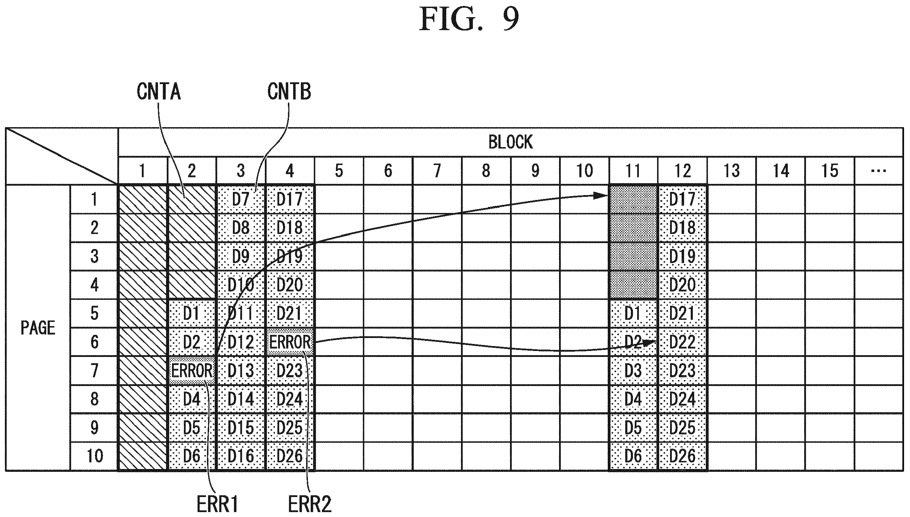

Here, a data movement process in the present embodiment will be described with reference to FIGS. 8 and 9.

FIG. 8 is a flowchart illustrating an example of the movement process according to the present embodiment. Also, FIG. 9 is a diagram illustrating an example of the movement process according to the present embodiment.

As illustrated in FIG. 8, in the movement process (the data movement process), a movement processing device 133 first determines whether there is a free area for movement (step S501). For example, the movement processing device 133 checks management information stored in a management information storage device 151 and determines whether there is a free area to which data can be moved in units of blocks. If there is a free area for movement (step S501: YES), the movement processing device 133 moves the process to step S502. Also, if there is no free area for movement (step S501: NO), the movement processing device 133 moves the process to step S504.

In step S502, the movement processing device 133 moves target data to the free area in units of blocks. For example, as illustrated in FIG. 9, the movement processing device 133 executes data movement in units of blocks.

In FIG. 9, first, a flash memory 110 is assumed to store content data CNTA and content data CNTB. In this state, when the content data CNTB is read, the movement processing device 133 causes data D3 of a page number "7" of a block number "2" to be moved to, for example, a block of a block number "11," in units of blocks if a cause (an error ERR1) for executing a movement process, such as the number of retries reaching a predetermined number of times, occurs in the data D3 of the page number "7" of the block number "2."

Also, when the content data CNTB is read, the movement processing device 133 causes data D22 of a page number "6" of a block number "4" to be moved to, for example, a block of a block number "12" in units of blocks if a cause (an error ERR2) for executing a movement process, such as the number of retries reaching the predetermined number of times, occurs in the data D22 of the page number "6" of the block number "4."

Although the reading retry movement process has been described in the above-described example, the description also applies to other movement processes (for example, a movement process for a reading retry error, a movement process for a reading disturbance countermeasure, and a movement process for a data retention countermeasure).

Returning to the description of FIG. 8, next, the movement processing device 133 updates management information and statistical information (step S503). Because the processing of steps S503 to S505 is similar to the processing of steps S403 to S405 illustrated in FIG. 6 described above, a description thereof will be omitted here.

As described above, in the broadcasting system 1 and the video server 10 according to the present embodiment, when page data is moved to another area, the memory controller 130 causes the page data to be moved to another area of the flash memory 110 in units of collectively erasable blocks, which are units of blocks (second areas) including the page data to be moved.

Thereby, the broadcasting system 1 and the video server 10 according to the present embodiment have advantageous effects similar to those of the first embodiment, and can improve reliability. Also, because the broadcasting system 1 and the video server 10 according to the present embodiment move data in units of blocks, it is possible to manage the moved data in units of blocks and simplify management of the moved data.

### (Third embodiment)

Next, a broadcasting system 1 and a video server 10 according to a third embodiment will be described with reference to the drawings.

Also, the broadcasting system 1 and the video server 10 according to the present embodiment are similar to those of the above-described first embodiment except that the movement process is executed in units of contents data. Because configurations of the broadcasting system 1 and the video server 10 of the present embodiment are similar to those of the first embodiment illustrated in FIGS. 1 and 2, descriptions thereof will be omitted here.

In the present embodiment, when page data is moved to another area, a memory controller 130 causes the page data to be moved to the other area in units of contents data including the page data to be moved.

Also, because a basic operation of the video server 10 according to the present embodiment is similar to that of the first embodiment illustrated in FIGS. 3 to 5 described above, a description thereof will be omitted here.

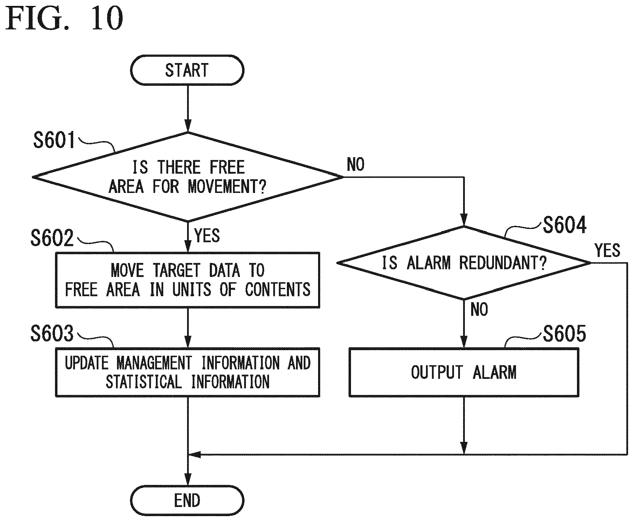

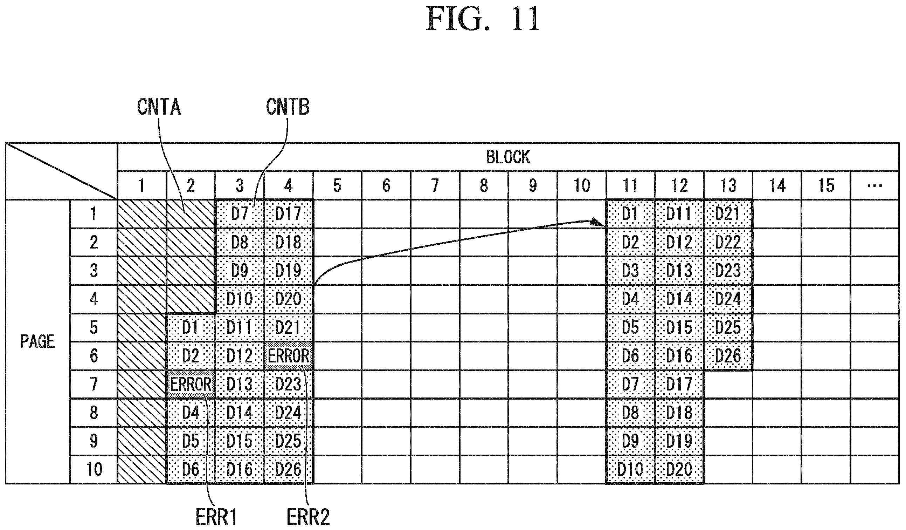

Here, a data movement process in the present embodiment will be described with reference to FIGS. 10 and 11.

FIG. 10 is a flowchart illustrating an example of the movement process according to the present embodiment. Also, FIG. 11 is a diagram illustrating an example of the movement processing according to the present embodiment.

As illustrated in FIG. 10, in the movement process (the data movement process), a movement processing device 133 first determines whether there is a free area for movement (step S601). For example, the movement processing device 133 checks management information stored in a management information storage device 151 and determines whether there is a free area to which data can be moved in units of contents data. If there is a free area for movement (step S601: YES), the movement processing device 133 moves the process to step S602. Also, if there is no free area for movement (step S601: NO), the movement processing device 133 moves the process to step S604.

In step S602, the movement processing device 133 moves target data to the free area in units of contents data. For example, as illustrated in FIG. 11, the movement processing device 133 executes data movement in units of contents data.

In FIG. 11, first, a flash memory 110 is assumed to store content data CNTA and content data CNTB. In this state, when the content data CNTB is read, the movement processing device 133 causes the content data CNTB including data D3 and data D22 to be moved to, for example, blocks of block numbers "11" to "13" in units of contents data if a cause for executing a movement process such as that the number of retries reaches the predetermined number of times occurs in the data D3 of a page number "7" of a block number "2" and the data D22 of a page number "6" of a block number "4."

Although the movement process for reading retry has been described in the above-described example, the description also applies to other movement processes (for example, a movement process for a reading retry error, a movement process for a reading disturbance countermeasure, and a movement process for a data retention countermeasure).

Returning to the description of FIG. 10, next, the movement processing device 133 updates management information and statistical information (step S603). Also, because the processing of steps S603 to S605 is similar to the processing of steps S403 to S405 illustrated in FIG. 6 described above, a description thereof will be omitted here.

As described above, in the broadcasting system 1 and the video server 10 according to the present embodiment, when page data is moved to another area, the memory controller 130 causes the page data to be moved to another area of the flash memory 110 in units of contents data including the page data to be moved.

Thereby, the broadcasting system 1 and the video server 10 according to the present embodiment have advantageous effects similar to those of the first embodiment, and can improve the reliability. Also, because the broadcasting system 1 and the video server 10 according to the present embodiment move data in units of contents data, it is possible to manage the moved data in units of contents data and further simplify management of the moved data.

Although each of the above embodiments has been described solely by way of example, it is also possible to combine each of the embodiments. Although an example in which the video server 10 executes the movement process for the reading error, the movement process for the reading retry error, the movement process for the reading disturbance countermeasure, and the movement process for the data retention countermeasure has been described in each of the above embodiments, some of these movement processes may be executed.

Also, although an example in which the management information storage device 151, the statistical information storage device 152, and the alarm information storage device 153 are different storage devices has been described in each of the above-described embodiments, some or all of these storage devices may be integrated into one storage device.

Also, although an example in which a threshold value for the number of times of reading (the second number of times) is changed in accordance with the number of times of rewriting has been described in each of the above-described embodiments, the threshold value for the number of retries (the first number of times) or the threshold value (the predetermined period) for the period since writing may be changed in accordance with the number of times of rewriting.

Although an example in which the video server 10 transmits (outputs) content data to the broadcasting equipment 6 and the monitor device 7 has been described in each of the above-described embodiments, content data may be transmitted to another device such as a video server of another system.

Also, although a case in which the receiving device 11 includes an operation of encoding content data such as received video signals has been described in the above-described embodiment, the receiving device 11 may receive encoded content data. Also, although a case in which the output device 13 includes a function of decoding content data (e.g., video data) read from the memory device 12 has been described, the output device 13 may output encoded content data.

Also, although an example in which the flash memory 110 is an MLC type NAND flash memory has been described as an example of the semiconductor memory provided in the memory device 100 in the above embodiment, the embodiments are not limited thereto. The semiconductor memory included in the memory device 100 may be an SLC type flash memory or another rewritable semiconductor memory (e.g., an EEPROM, a RAM, a ferroelectric random access memory (FeRAM), or the like).

According to at least one embodiment described above, it is possible to improve reliability by providing the memory controller 130 configured to cause page data for which the number of retry processes reaches the first number of times to be moved to another area of the flash memory 110 if the number of reading retry processes reaches the predetermined first number of times (a predetermined threshold value).

Also, processes in components provided in the above-described video server 10 may be performed by recoding a program for implementing functions of the components provided in the above-described video server 10 on a computer-readable recording medium and causing a computer system to read and execute the program recorded on the recording medium. Here, "causing the computer system to read and execute the program recorded on the recording medium" includes installing the program in the computer system. The "computer system" described here is assumed to include an operating system (OS) and hardware such as peripheral devices.

Also, the "computer system" may include a plurality of computer devices connected via the Internet, a wide area network (WAN), a local area network (LAN), or a network including a communication line such as a dedicated line. Also, the "computer-readable recording medium" refers to a flexible disk, a magneto-optical disc, a read only memory (ROM), a portable medium such as a compact disc (CD)-ROM, or a storage medium such as a hard disk embedded in the computer system. As described above, the recording medium storing the program may be a non-transitory recording medium such as a CD-ROM.

Also, the recording medium includes a recording medium internally or externally provided to be accessed from a distribution server for distributing the program. Also, a configuration in which a program is divided into a plurality of parts and components provided in the video server 10 combine the parts after the parts are downloaded at different timings may be adopted, or distribution servers for distributing the parts into which the program is divided may be different. Furthermore, the "computer-readable recording medium" is assumed to include a medium that holds a program for a constant period of time, such as a volatile memory (random access memory (RAM)), inside a computer system serving as a server or a client when the program is transmitted via a network. Also, the above-described program may be a program for implementing some of the above-described functions. Further, the above-described program may be a program capable of implementing the above-described function in combination with a program already recorded on the computer system, i.e., a so-called differential file (differential program).

Also, some or all of the above-described functions may be implemented as an integrated circuit such as large scale integration (LSI). The above-described functions may be individually formed as a processor, or some or all thereof may be integrated into a processor. Also, a method of forming an integrated circuit is not limited to LSI, and may be implemented by a dedicated circuit or a general-purpose processor. Also, when the technology of an integrated circuit with which LSI is replaced emerges due to the advancement of semiconductor technology, the integrated circuit based on the technology may be used.

While certain embodiments have been described, these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A video server comprising:
a memory device;
a receiving device that acquires contents data;
a server control device that stores, into the memory device, the contents data acquired by the receiving device, the server control device that reads the contents data out of the memory device;
an output device that outputs the contents data read out of the memory device by the server control device;
**characterized in that** the memory device comprises:
a semiconductor memory device; and
a memory control device that stores, in a first unit of area, the contents data in the semiconductor memory device and read, in the first unit of area, the contents data out of the semiconductor memory device, the memory control device that performs a read-retry-operation of re-reading the contents data out of a first area of the semiconductor memory device in the first unit of area in case that the memory control device detected an error on the contents data that the memory control device have read out of the first area of the semiconductor memory device in the first unit of area, and the memory control device that moves the contents data in the first area into a second area of the semiconductor memory device, which is different from the first area in case that a number of times of performing the read-retry-operation by the memory control device reached at a first number of times of read-retry-operations.

2. The video server according to Claim 1, **characterized in that** the memory control device moves the contents data in the first area into the second area of the semiconductor memory device in case that a number of times of having read the contents data out of the first area by the memory control device reached at a second number of times of reading.

3. The video server according to Claim 2, **characterized in that** the second number of times of reading is defined in accordance with a number of times of performing re-writing into the first area.

4. The video server according to Claim 1, **characterized in that** the memory control device moves the contents data in the first area into the second area of the semiconductor memory device in case that a predefined time period has elapsed from having rewritten the contents data in the first area.

5. The video server according to Claim 1, **characterized in that** the memory control device moves, as a first unit, the contents data in the first area into the second area of the semiconductor memory device.

6. The video server according to Claim 1, **characterized in that** the memory control device moves, as a second unit, contents data in a third area including the first area into a fourth area of the semiconductor memory device, and the second unit is a collectively erasable unit.

7. The video server according to Claim 1, **characterized in that** the memory control device moves, as a data contents unit, contents data in a fifth area including the first area into a different area from the fifth area of the semiconductor memory device.

8. The video server according to Claim 1, **characterized in that** the memory control device performs the read-retry-operation in case that the memory control device detected an error on the contents data that the memory control device have read out of the first area of the semiconductor memory device.

9. The video server according to Claim 1, **characterized in that** the memory control device determines whether another area is secured for storing the contents data of the first area, and the memory control device outputs an alarm in case that the memory control device determines that the other area is not secured.

10. A broadcasting system comprising:
a video server of any one of claims 1-9;
a transmitter device that transmits the contents data to the video server; and
a broadcasting equipment that broadcasts the contents data from the video server.
